# DEMANDE DE BREVET EUROPEEN

(11) **EP 0 603 041 A1**
(43) Date de publication de la demande: **22.06.1994**
(21) Numéro de dépôt: 93402994.3
(22) Date de dépôt: 13.12.1993
(51) Int. Cl.: G02B 6/255, G02B 6/42

(54) **Préparation d'une surface terminale d'une fibre optique avec lentilles multiples en vue d'un couplage optimum**

(30) Priorité: 15.12.1992 FR 9215089
(71) Demandeur: FRANCE TELECOM, F-75015 Paris (FR)
(72) Inventeur: Semo, Jack, F-91120 Palaiseau (FR); Kalonji, Ndiata, F-94200 Ivry/Seine (FR)
(74) Mandataire: Martin, Jean-Jacques

(57) **Abrégé**

La présente invention concerne un Procédé de préparation d'une fibre optique en vue d'un couplage optimum avec un phototransducteur, caractérisé par le fait qu'il comprend les étapes qui consistent à : cliver une surface d'extrémité (102) d'une fibre optique (100), et déposer successivement sur cette surface clivée (102) et en face du coeur (106) de la fibre, une succession de lentilles coaxiales (220), convexes, de rayons de courbure croissants en rapprochement de la fibre (100).

La présente invention concerne également un système obtenu par la mise en oeuvre du procédé.

## Description

La présente invention concerne le domaine des fibres optiques destinées à être couplées avec un phototransducteur.

Dans le cadre de la présente invention, l'expression "phototransducteur" regroupe les systèmes optiques récepteurs aptes à transformer un signal optique reçu en provenance d'une fibre optique, en un signal électrique, et les systèmes optiques émetteurs aptes à générer un signal optique en direction d'une fibre optique. Ces systèmes optiques peuvent être formés de circuits intégrés optiques.

On a déjà proposé à maintes reprises de placer une lentille en regard d'une fibre optique, pour assurer un couplage entre un phototransducteur et celle-ci.

A titre d'exemple, les documents suivants enseignent différentes variantes d'utilisation de telles lentilles de couplage : DE-A-3632743, FR-A-2548391, IEEE JOURNAL OF QUANTUM ELECTRONICS vol. 16 n°10, Octobre 1980, New York US, pages 1067-1072, YAMADA et al. "characteristics of a hemispherical microlens for coupling between a semiconductor laser and single-mode fiber" page 1067-1068, PATENT ABSTRACTS OF JAPAN vol.9 n° 262 et APPLIED OPTICS vol. 29 n° 18, 20 Juin 1990, New York US, pages 2692-2695.

Les inventeurs ont déjà proposé des perfectionnements à ces dispositifs connus, dans la demande de brevet français n° 91 11493 déposée le 18 Septembre 1991, intitulée "Fibre optique perfectionnée pour couplage avec un phototransducteur et procédé de préparation".

On a ainsi représenté sur la figure 1 annexée, un dispositif conforme à l'enseignement de la demande de brevet antérieure FR-91 11493.

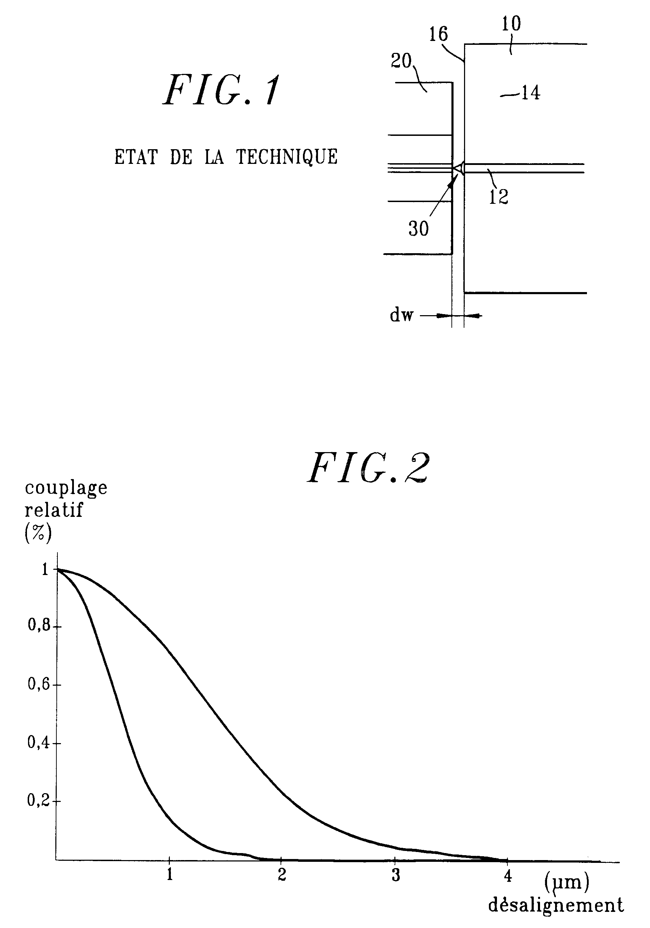

Sur cette figure 1 annexée, on distingue une fibre optique 10 comprenant un coeur 12 entouré d'une gaine 14, ainsi qu'un phototransducteur 20 aligné sur le coeur 12, et une microlentille 30 rapportée par soudure sur une face d'extrémité clivée 16 de la fibre optique 10, en regard du coeur 12.

Une étude détaillée montre que les paramètres qui influent sur la puissance optique couplée dans une fibre de type déterminé et pourvue d'une lentille collectrice 30 sont nombreux et comprennent en particulier :
- la longueur d'onde du rayonnement,
- l'ouverture angulaire du faisceau,
- le rayon de courbure de la lentille collectrice 30,
- la précision de son centrage sur le coeur 12 de la fibre 10,
- la distance dw séparant le phototransducteur 20 de cette lentille 30,
- l'écart transversal de positionnement du phototransducteur 20 devant le coeur 12 de la fibre (erreur de montage).

La présente invention a maintenant pour but de perfectionner les systèmes antérieurs connus.

Ce but est atteint selon la présente invention grâce à un procédé comprenant les étapes qui consistent à :
- cliver une surface d'extrémité d'une fibre optique, et
- déposer successivement sur cette surface clivée, et en face du coeur de la fibre, une succession de lentilles coaxiales, convexes, de rayons de courbure croissants en rapprochement de la fibre.

Selon une caractéristique avantageuse de la présente invention, les différentes lentilles sont déposées sur la surface clivée en réitérant successivement et un nombre de fois égal au nombre de lentilles requises, la séquence d'étapes consistant à :
a) étirer un morceau de fibre optique jusqu'à rupture, sous l'action d'un chauffage, par exemple sous l'action d'un arc,
b) aligner la pointe obtenue sur l'axe du coeur de la fibre pour la première lentille, puis par la suite sur l'axe de la lentille antérieure, avec mise en contact et légère pression,
c) souder en surface la pointe mise en contact,
d) libérer une aiguille calibrée par traction de la pointe, et
e) lentiller par fusion contrôlée l'aiguille ainsi obtenue.

La présente invention concerne également les systèmes obtenus par la mise en oeuvre de ce procédé.

D'autres caractéristiques, buts et avantages de la présente invention apparaîtront à la lecture de la description détaillée qui va suivre, et en regard des dessins annexés donnés à titre d'exemples non limitatifs et sur lesquels :
- la figure 1 précédemment décrite représente schématiquement, selon une vue en coupe axiale, un système à fibre optique, phototransducteur et lentille collectrice, conforme à l'état de la technique,
- la figure 2 représente le couplage optique entre le phototransducteur et une fibre optique en fonction du désalignement entre ceux-ci, dans le plan transversal à l'axe optique,
- la figure 3 représente une vue schématique en coupe axiale d'un système conforme à la présente invention, comprenant trois lentilles coaxiales déposées en regard du coeur de la fibre,
- les figures 4 à 9 représentent schématiquement les diverses étapes de réalisation d'une lentille conforme à la présente invention,
- la figure 10 représente le couplage optique obtenu en fonction de la distance phototransducteur-fibre optique,
- la figure 11 représente une vue à échelle agrandie d'un dispositif conforme à la présente invention comprenant trois lentilles, et
- les figures 12 et 13 illustrent, selon des vues schématiques en coupe axiale, deux variantes de réalisation conformes à la présente invention.

Comme on l'a indiqué précédemment, le procédé conforme à la présente invention consiste essentiellement :
i) à cliver une surface d'extrémité 102 d'une fibre optique 100, et
ii) déposer successivement sur cette surface clivée 102, et en face du coeur 106 de la fibre 100, une succession de lentilles 220 coaxiales, convexes, de rayons de courbure croissants en rapprochement de la fibre 100.

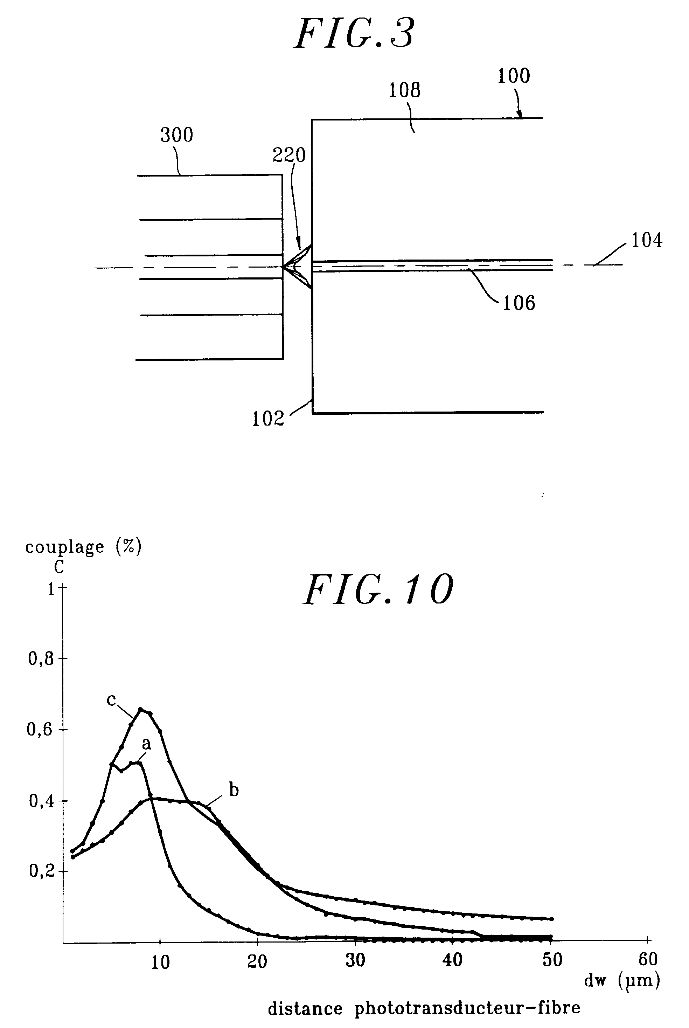

On distingue sur la figure 3 annexée, une fibre monomode 100 comprenant une gaine 108 qui entoure le coeur 106 précité. La gaine 108 a typiquement un diamètre de l'ordre de 125µm, alors que le coeur 106 a typiquement un diamètre de l'ordre de 9µm.Le phototransducteur est référencé 300.

L'étape de clivage de la fibre optique 100 consiste à sectionner ladite fibre de sorte que sa face d'extrémité résultant 102 soit au moins sensiblement plane et orthogonale à son axe central 104. La surface de cette face d'extrémité clivée 102 est donc égale à la section transversale du coeur 106 et de la gaine 108 qui l'entoure.

Cette étape de clivage peut être réalisée selon tout processus de sectionnement connu de l'homme de l'art, le cas échéant, par simple courbure de la fibre 100 jusqu'à rupture brusque de celle-ci après amorce de rupture à l'aide d'un tranchant très dur.

Pour déposer la première lentille 220 sur l'extrémité clivée 102, en regard du coeur 106, on procède de préférence comme suit.

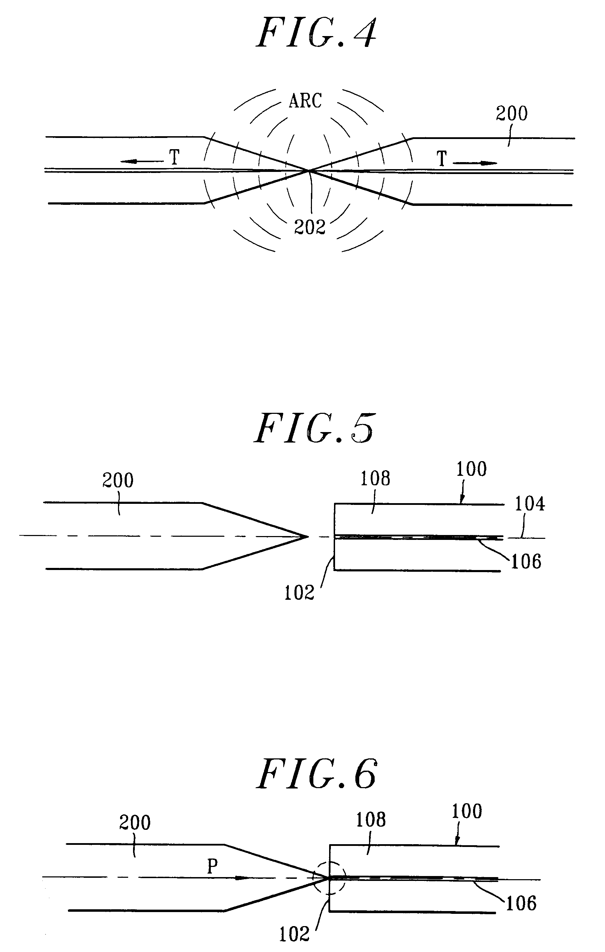

Comme représenté sur la figure 4, un petit morceau d'une autre fibre 200 est étirée (traction T) coaxialement et symétriquement jusqu'à la rupture en un point 202, sous l'action d'un arc électrique. Le morceau de fibre 200 peut avoir par exemple une longueur de l'ordre d'une dizaine de cm. La fibre 200 étirée est de préférence de même nature que la fibre 100 clivée. A la fin de l'étape d'étirage, on obtient ainsi deux bouts de fibre optique 200 possédant chacun une extrémité effilée en cône.

Un bout étiré de fibre optique 200 est alors placé en regard de l'extrémité clivée 102 de la fibre 100 et aligné sur celle-ci, comme représenté sur la figure 5. Cet alignement peut être opéré par tout moyen approprié, par exemple en plaçant la fibre 100 clivée et le bout de fibre étirée 200, sur des supports en V appropriés. Les techniques connues d'épissurage de fibres optiques utilisent couramment de tels supports en V en saphir, présentant une précision de l'ordre du µm. Pour cette raison, ces supports en V ne sont pas représentés sur les figures annexées et ne seront pas décrits plus en détail par la suite.

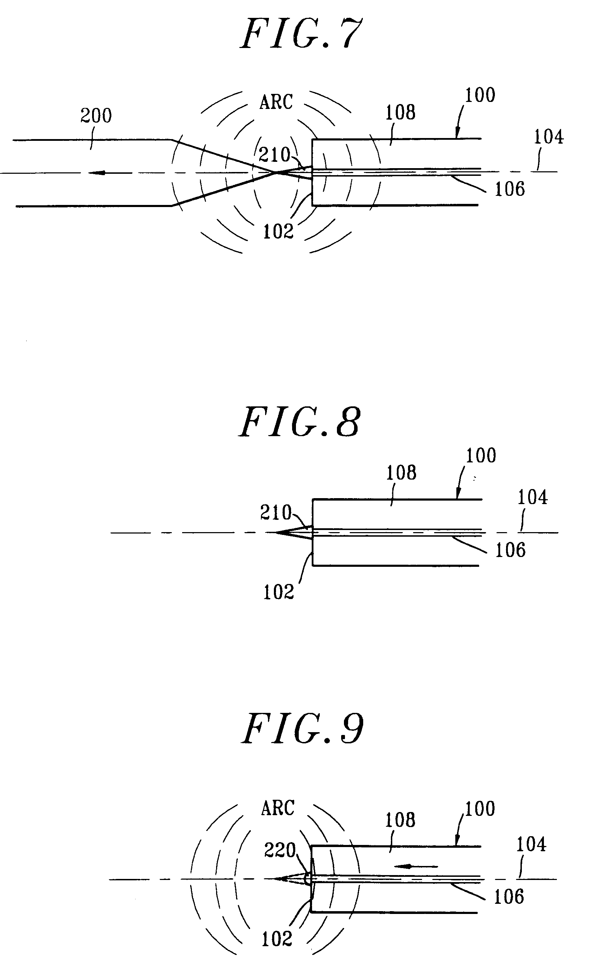

La pointe de la fibre étirée 200 est ensuite mise en contact mécanique avec le coeur 106 de la fibre clivée 100, et ce sous une légère pression axiale P, comme représenté sur la figure 6, tout en conservant l'alignement antérieur entre la fibre étirée 200 et la fibre clivée 100.

L'ensemble obtenu est soumis à un arc électrique, comme représenté sur la figure 7, pour obtenir une fusion rapide et de faible intensité de la pointe de la fibre étirée 200. Cette fibre 200 est retirée dès l'apparition du soudage de cette pointe sur le coeur 106 de la fibre clivée 100. Ce retrait de la fibre étirée 200 conduit à libérer une aiguille de verre 210 centrée sur l'axe 104 et liée au coeur 106 de la fibre clivée 100, comme représenté sur la figure 8.

Il reste alors, comme représenté sur la figure 9, à faire fondre l'aiguille de verre 210, à l'aide d'une ou plusieurs passes sous arc de faible intensité, pour transformer l'aiguille 210 en une lentille 220 de courbure désirée.

L'ensemble des étapes précité peut être mis en oeuvre en quelques minutes. On obtient alors une fibre optique 100 comprenant une extrémité clivée 102 et une lentille 220 rapportée par soudure sur cette extrémité clivée en regard du coeur 106 de la fibre optique 100.

Pour réaliser plusieurs lentilles de diamètre croissant, en regard du coeur 106, il convient de réitérer les étapes précitées représentées sur les figures 4 à 9, un nombre de fois égal au nombre de lentilles que l'on souhaite déposer.

En d'autres termes, la pose de la seconde lentille et éventuellement de toutes lentilles ultérieures, est opérée grâce à la séquence d'étapes consistant à :
a) étirer un nouveau morceau de fibre optique,
b) aligner la pointe obtenue sur l'axe de la lentille antérieure, avec mise en contact et légère pression,
c) souder en surface la pointe sous l'arc électrique,
d) libérer une aiguille calibrée par traction de la pointe sous l'arc, et
e) lentiller par fusion contrôlée l'aiguille ainsi obtenue.

Il convient de noter qu'au cours de l'étape a) d'étirage d'un nouveau morceau de fibre optique, la conicité de la pointe obtenue par étirage doit être contrôlée pour pouvoir libérer, à l'étape d), une aiguille de taille convenable compatible avec le rayon de courbure désiré pour la nouvelle lentille.

De plus, la puissance de l'arc électrique utilisé au cours des étapes c), d) et e) doit être adaptée à chacune des étapes mentionnées, sous peine de voir disparaître les masses de verre les plus petites.

Pour opérer la fusion requise de la fibre 200, les inventeurs ont utilisé lors d'essais une microsoudeuse du type "micro fusion splicer ms-1.008" commercialisé par la Société FOUNDATION INSTRUMENTS. Une telle microsoudeuse engendre un arc électrique.

L'utilisation d'un chauffage à l'arc électrique n'est cependant pas obligatoire. Il peut être remplacé par exemple par un chauffage à l'aide d'une source laser de puissance pourvu que l'on veille à respecter un alignement précis entre la fibre clivée 100 et l'extrémité étirée 200 qui apporte la microlentille 220 sur le coeur 106, et que l'on veille à produire une fusion locale très rapide de la pointe 200 afin de souder sur le coeur 106 de la fibre clivée 100 une aiguille de verre 210 de dimension appropriée.

On va maintenant démontrer que l'utilisation d'une succession de lentilles 220 coaxiales convexes de rayons de courbure croissants, comme préconisé dans le cadre de la présente invention, à la place d'une lentille hémisphèrique simple, permet d'améliorer le couplage transducteur/fibre optique.

Les inventeurs ont tout d'abord déterminé que dans un système classique à lentille hémisphérique simple, le rayon de cette lentille conditionne directement la position et la hauteur du maximum de couplage obtenu en fonction de la distance transducteur/fibre, suivant l'axe de celle-ci, pour une ouverture angulaire déterminée du faisceau. Plus précisément, une lentille hémisphèrique simple, de rayon de courbure très petit (par exemple inférieur à 8µm) ne peut collecter un maximum de lumière que si la distance transducteur/lentille reste suffisamment petite pour que le cône d'émission coïncide avec l'ouverture numérique de la lentille (comme schématisé sur la figure 1).

Ceci est bien entendu très contraignant puisque le positionnement de la fibre 10 doit alors se faire à une distance dw du phototransducteur 20 équivalente au rayon de courbure de l'ordre de 10µm et avec une précision de centrage transversal du 10ème de µm selon la courbe représentée sur la figure 2.

Dans le cadre du système conforme à la présente invention, la plus petite lentille, c'est-à-dire la lentille 220 présentant le rayon de courbure le plus faible, qui correspond également à la lentille la plus éloignée de la face clivée 102 de la fibre optique, collecte la partie centrale du faisceau émis correspondant au maximum d'énergie d'un faisceau gaussien.

La lentille 220 suivante, de rayon de courbure supérieur, s'intéresse jusqu'à sa périphérie à la partie du faisceau non occulté par la précédente, et ainsi de suite dans l'hypothèse d'une succession de lentilles de courbures décroissantes (ou rayons de courbure croissants) en rapprochement de la fibre 100.

Pour une fibre optique monomode du type 9/125, c'est-à-dire une fibre optique 100 présentant un coeur 106 de diamètre égal à 9µm et une gaine 108 de diamètre égal à 125µm, l'association de plusieurs lentilles conformes à la présente invention conduit à un gain appréciable de son couplage avec un phototransducteur 300, si les rayons de courbure des diverses lentilles 220 restent inférieurs à la dizaine de micromètres, au moins pour les deux premières lentilles 220.

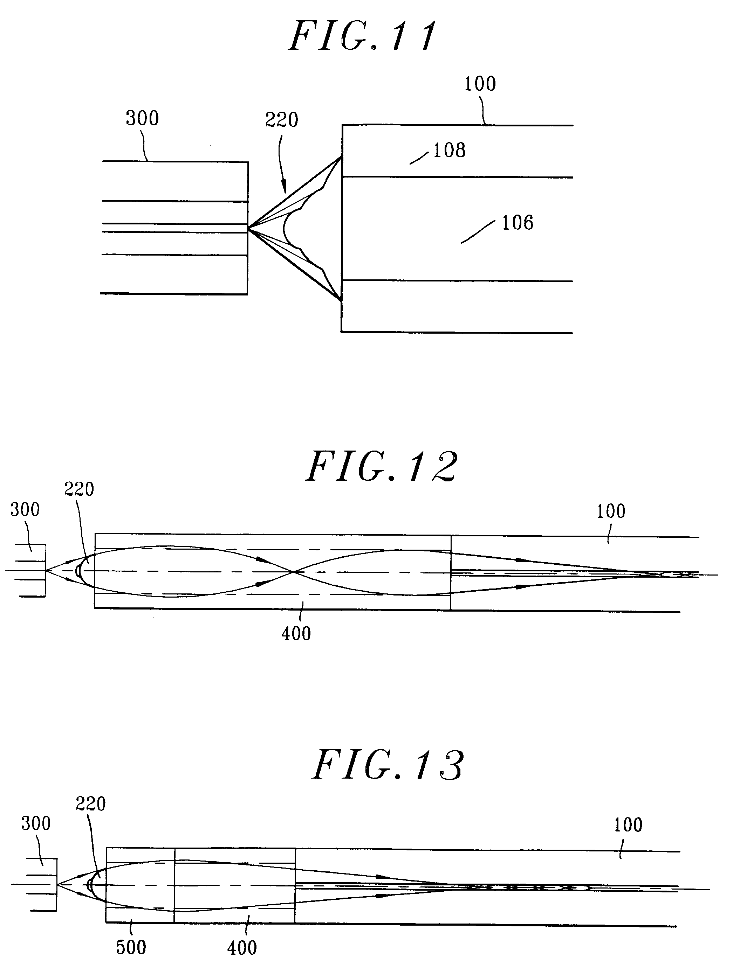

La figure 10 annexée représente le coefficient de couplage obtenu entre une fibre optique 100 et un phototransducteur 300, en fonction de la distance dw séparant sur l'axe 104, ce dernier de la fibre. La figure 10 correspond plus précisément aux données suivantes :
- fibre monomode 8/125,
- rayon du coeur 106 : 4µm,
- divergence du faisceau ± 45°,
- indice de la gaine 108 : 1,445,
- indice du coeur 106 : 1,450,
- longueur d'onde du rayonnement : 1,3µm,
- indice des lentilles : 1,450.

Plus précisément encore, les courbes 10a et 10b repésentent les valeurs du coefficient du couplage C respectivement obtenu avec des lentilles hémisphériques simples 220 déposées en regard du coeur 106 et présentant, l'une un rayon de courbure de 4µm, l'autre un rayon de courbure de 8µm. En outre, la courbe identifiée par l'indice c sur la figure 10 correspond au coefficient de couplage obtenu à l'aide d'une lentille double conforme à la présente invention comprenant deux lentilles de rayons de courbure respective de 4 et 8µm.

La comparaison de la courbe 10c avec les courbes 10a et 10b pécédemment évoquées montre que le coefficient de couplage C obtenu grâce à la présente invention est majoré de 35% par rapport à la meilleure des lentilles simples, tandis qu'un accroissement de la distance phototransducteur 300 fibre dw introduit moins de perte de couplage.

Bien entendu la présente invention n'est pas limitée à l'utilisation d'une lentille double 220, comme représenté sur la figure 3. Ainsi, sur la figure 11, on a représenté une triple lentille 220 en regard de la face clivée 102 de la fibre optique.

La création et l'empilage sur un même axe d'une série de lentilles hémisphériques de rayons variables sont, il est vrai, des étapes assez délicates à réaliser. Cependant dans le cadre de la présente invention, il est également proposé d'intercaler entre la série de lentilles 220 et la fibre monomode 100 à saut d'indice, un élément de fibre multimode à gradient d'indice permettant d'accroître les dimensions des lentilles en augmentant l'ouverture numérique du système.

On a ainsi représenté schématiquement sur la figure 12 annexée, un élément de fibre multimode à gradient d'indice 400 intercalé entre l'ensemble de lentilles 220 et la fibre monomode 100.

Les caractéristiques diamètre du coeur et forme du gradient, de la fibre multimode à gradient d'indice 400 conditionnent la périodicité de propagation de l'onde lumineuse guidée. Ainsi, en choisissant un élément de fibre multimode à gradient d'indice 400 de longueur calibrée adéquate, on peut obtenir des couples angulaires d'entrée/sortie en parfaite correspondance avec d'un côté l'ensemble de lentilles 220, de l'autre la fibre 100.

Selon encore un autre perfectionnement représenté sur la figure 13, pour obtenir un meilleur couplage entre le phototransducteur 300 et la fibre 100, on peut intercaler en outre entre l'ensemble de lentilles 220 et l'élément de fibre multimode à gradient d'indice 400, un morceau de fibre multimode à saut d'indice 500 de longueur calibrée. Le morceau de fibre 500 permet d'augmenter le diamètre du faisceau incident jusqu'au diamètre utile de la fibre 400. Il procure en outre au système un avantage appréciable en accroissant la distance frontale dw.

Bien entendu dans le cas où le diamètre du faisceau à la sortie de l'ensemble de lentilles 220 coïncide avec le diamètre utile de la fibre multimode à gradient d'indice 400, l'on peut se dispenser du morceau de fibre intermédiaire 500 multimode à saut d'indice.

Les morceaux de fibre 400 et 500 peuvent être fixés sur la figure 100 par épissurage classique, à l'aide de tout appareillage connu. De préférence, on choisit pour faciliter cette opération, des fibres 100, 400 et 500 de même diamètre.

L'interposition entre la fibre 100 et l'optique collectrice formée de l'ensemble de lentilles 220 d'un élément de fibre multimode 400 (50/125, 62,5/125 ou 85/125) à gradient d'indice de longueur calculée (typiquement de quelques centaines de micromètres) conduit à une optique de focalisation 220 dont les rayons de courbure des lentilles s'échelonnent cette fois entre 10 et 100µm.

La distance optimale du couplage avec le phototransducteur 300, devient par voie de conséquence beaucoup moins critique, puisqu'elle atteint alors plusieurs dizaines de micromètres.

Les essais réalisés par les inventeurs ont prouvé un accroissement de coefficient de couplage et une amélioration de la précision de l'alignement phototransducteur/fibre, du fait de la superposition de lentilles de courbure croissante. La courbe résultante portant l'indice c sur la figure 10 démontre un maximum de coefficient de couplage plus élevé, suivi d'une décroissance moins prononcée, signe d'une meilleure stabilité du couplage avec l'écartement phototransducteur/fibre.

Bien entendu la présente invention n'est pas limitée aux modes de réalisation particuliers qui viennent d'être décrits mais s'étend à toute variante conforme à son esprit.

## Revendications

1. Procédé de préparation d'une fibre optique en vue d'un couplage optimum avec un phototransducteur, caractérisé par le fait qu'il comprend les étapes qui consistent à :
- cliver une surface d'extrémité (102) d'une fibre optique (100), et
- déposer successivement sur cette surface clivée (102) et en face du coeur (106) de la fibre, une succession de lentilles coaxiales (220), convexes, de rayons de courbure croissants en rapprochement de la fibre (100).

2. Procédé selon la revendication 1, caractérisé par le fait que les différentes lentilles sont déposées sur la surface clivée (106) en réitérant successivement un nombre de fois égal au nombre de lentilles requises, la séquence d'étapes consistant à :
a) étirer un morceau de fibre optique (200),
b) aligner la pointe obtenue sur l'axe (104) du coeur (106) de la fibre (100) pour la première lentille, puis par la suite sur l'axe de la lentille antérieure, avec mise en contact et légère pression,
c) souder en surface la pointe mise en contact,
d) libérer une aiguille calibrée (210) par traction de la pointe, et
e) lentiller par fusion contrôlée l'aiguille (210) ainsi obtenue.

3. Procédé selon l'une des revendications 1 ou 2, caractérisé par le fait qu'il comprend l'étape consistant à déposer successivement au moins deux lentilles (220).

4. Procédé selon l'une des revendications 1 à 3, caractérisé par le fait qu'il comprend l'étape consistant à déposer un nombre de lentilles (220) supérieur à deux.

5. Procédé selon l'une des revendications 1 à 4, caractérisé par le fait que le rayon de courbure des lentilles (220) est inférieur à quelques dizaines de micromètres.

6. Procédé selon l'une des revendications 1 à 4, caractérisé par le fait qu'il consiste en outre à placer un élément de fibre multimode à gradient d'indice (400) en regard de la fibre optique (100) et à déposer les lentilles sur une face clivée de cet élément de fibre multimode à gradient d'indice (400).

7. Procédé selon l'une des revendications 1 à 6, caractérisé par le fait qu'il comprend en outre l'étape consistant à placer un morceau de fibre multimode à saut d'indice (500) en regard de l'élément de fibre multimode à gradient d'indice (400) et à placer les lentilles sur ledit morceau de fibre multimode à saut d'indice (500).

8. Procédé selon l'une des revendications 6 ou 7, caractérisé par le fait que le rayon de courbure des lentilles (220) est compris entre 10 et 100µm.

9. Système optique comprenant un phototransducteur (300) couplé à une fibre optique (100), obtenu par la mise en oeuvre du procédé conforme à l'une des revendications 1 à 8.

10. Système selon la revendication 9, caractérisé par le fait qu'il comprend au moins deux lentilles (220).

11. Système selon l'une des revendications 9 ou 10, caractérisé par le fait qu'il comprend un nombre de lentilles (220) supérieur à deux.

12. Système selon l'une des revendications 9 à 11, caractérisé par le fait que le rayon de courbure des lentilles (220) est inférieur à quelques dizaines de microns.

13. Système selon l'une des revendications 9 à 12, caractérisé par le fait qu'il comprend un élément de fibre multimode à gradient d'indice (400) intercalé entre l'ensemble de lentilles (220) et la fibre monomode (100).

14. Système selon la revendication 13, caractérisé par le fait qu'il comprend en outre un morceau de fibre multimode à saut d'indice (500) entre l'ensemble de lentilles (220) et l'élément de fibre multimode à gradient d'indice (400).

15. Système selon l'une des revendications 13 ou 14, caractérisé par le fait que le rayon de courbures des lentilles (220) est compris entre 10 et 100µm.
